# EUROPÄISCHE PATENTSCHRIFT

(11) **EP 3 112 139 B1**
(45) Veröffentlichungstag und Bekanntmachung des Hinweises auf die Patenterteilung: **21.08.2024**
(21) Anmeldenummer: 16176392.5
(22) Anmeldetag: 27.06.2016
(51) Int. Cl.: B29C 73/34, B29C 35/08

(54) **VERFAHREN UND VORRICHTUNG ZUM REPARIEREN VON BAUTEILEN**
METHOD AND DEVICE FOR REPAIRING COMPONENTS
PROCEDE ET DISPOSITIF DE REPARATION DE COMPOSANTS

(30) Priorität: 30.06.2015 DE 102015008312
(43) Veröffentlichungstag der Anmeldung: 04.01.2017
(73) Patentinhaber: Airbus Defence and Space GmbH, 82024 Taufkirchen (DE)
(72) Erfinder: Engel, Franz, 81539 München (DE); Weimer, Christian, 81539 München (DE); Orth, Tilman, 80469 München (DE)
(74) Vertreter: Isarpatent

(56) Entgegenhaltungen:
- EP-A2- 2 556 915
- DE-A1- 102011 053 375
- DE-A1- 102011 116 639
- DE-A1- 102012 109 275
- DE-A1- 102012 221 942
- US-A1- 2008 193 744
- US-B1- 6 683 421

## Beschreibung

Die Erfindung betrifft ein Verfahren und eine Vorrichtung zum Reparieren von Bauteilen, die faserverstärkten Kunststoff enthalten.

Faserverstärkte Bauteile finden in vielen Bereichen Anwendung, insbesondere in solchen, in denen sowohl eine gute Materialfestigkeit als auch ein relativ geringes Gewicht vorteilhaft sind. So kommen Bauteile aus Faserverbundwerkstoffen beispielsweise in der Luft- und Raumfahrttechnik zum Einsatz und werden zudem bei der Herstellung von Sportgeräten oder Fahrzeugen sowie in Anlagen und Gebäuden verwendet.

Im Falle einer Beschädigung eines derartigen Bauteils ist ein Reparaturverfahren bekannt, bei dem eine freigelegte schadhafte Stelle mit einem ausgehärten Flicken aus faserverstärktem Material abgeklebt wird. Alternativ kann eine Reparaturstelle geschäftet und die entstandene Schäftung mit halbausgehärteten Flicken aus Faserverbundwerkstoff ausgelegt oder mit trockenen Fasern sowie (flüssigem oder viskosem) Matrixmaterial ausgebessert werden. Die reparierte Stelle wird danach jeweils erwärmt, um eine Aushärtung des Reparaturmaterials zu bewirken.

Zum Erwärmen werden herkömmlich Heizstrahler oder Heizmatten verwendet.

Diese weisen jedoch gemeinhin keine gute Energieeffizienz auf. Darüber hinaus sind diese Heizgeräte sperrig und benötigen im Allgemeinen einen großen Aufbau. Schließlich ist der Wärmeeintrag in das Material durch diese Heizvorrichtungen kaum oder nur mit hohem Aufwand dynamisch steuerbar.

In der Druckschrift EP 2 556 915 A2 sind ein Verfahren und eine Vorrichtung zum Nachbearbeiten von Faserverbundwerkstoffen eines Flugzeugs offenbart. Hierzu wird ein Faserverbundflicken auf einer zu korrigierenden Stelle fixiert. Die Vorrichtung weist ein Gehäuse auf, das als eine Glocke die zu korrigierende Stelle umschließt. In dem Gehäuse ist ein Laser angeordnet, der von einem Computer gesteuert wird. Gemäß einer Ausführungsform der Druckschrift kann die Richtung des von dem Laser erzeugten Laserstrahls über eine Ablenkvorrichtung aus Spiegeln und Linsen gesteuert werden. In der Druckschrift DE102011053375A1 sind eine Vorrichtung und ein Verfahren zum Aushärten einer Harzmatrix durch UV-Licht Bestrahlung beschrieben.

Die vorliegende Erfindung hat die Aufgabe, eine verbesserte Technik zum Reparieren von unterschiedlich geformten faserverstärkten Kunststoff enthaltenden Bauteilen bereitzustellen.

Die Aufgabe wird gelöst durch ein Verfahren gemäß Anspruch 1, eine lichtemittierende Vorrichtung gemäß Anspruch 9 und eine Reparaturvorrichtung gemäß Anspruch 12.

Vorteilhafte Ausführungsformen sind in den Unteransprüchen offenbart.

Ein erfindungsgemäßes Verfahren dient einem Reparieren eines Bauteils, das faserverstärkten Kunststoff enthält. Das Verfahren umfasst ein Ein- und/oder Aufbringen mindestens eines zumindest teilweise verformbaren Materials in bzw. auf eine Reparaturstelle des Bauteils und ein Erwärmen des verformbaren Materials. Das Erwärmen umfasst ein Bestrahlen des verformbaren Materials mit Licht einer lichtemittierenden Vorrichtung.

Der faserverstärkte Kunststoff kann beispielsweise Kohlenstofffasern, Glasfasern, Polyethylen-Fasern und/oder Aramidfasern enthalten.

Ein erfindungsgemäßes Verfahren eignet sich für einmalige, aber auch für wiederholte Reparaturen. Beispielsweise kann eine Reparaturstelle nach dem Erwärmen des verformbaren Materials einen erneuten Defekt aufweisen und kann das Verfahren ein erneutes Reparieren des Bauteils an der Reparaturstelle umfassen.

Eine erfindungsgemäße lichtemittierende Vorrichtung ist dazu eingerichtet bzw. geeignet, in einer Ausführungsform eines erfindungsgemäßen Verfahrens zum Erwärmen eines zumindest teilweise verformbaren Materials verwendet zu werden.

Eine erfindungsgemäße Reparaturvorrichtung dient einem Reparieren eines Bauteils, das faserverstärkten Kunststoff enthält, und umfasst eine erfindungsgemäße lichtemittierende Vorrichtung. ein erfindungsgemäßes Verfahren, eine erfindungsgemäße lichtemittierendeVorrichtung und eine erfindungsgemäße Reparaturvorrichtung ermöglichen ein Erwärmen und damit Aushärten des verformbaren Materials, das in vorteilhafter, einfacher Weise dynamisch geregelt werden kann und gegenüber herkömmlicher Erwärmung eine hohe Energieeffizienz aufweist. Zudem kann eine Reparaturstelle gezielt mit lokal unterschiedlichen Wärmeeinträgen behandelt werden.

Das zumindest teilweise verformbare Material kann beispielsweise einen ausgehärteten Flicken aus faserverstärktem Material mit einem nicht ausgehärteten Klebstoff umfassen, und/oder einen halbausgehärteten Flicken aus.

Faserverbundwerkstoff (der reaktive Gruppen enthalten kann, also Moleküle, die mit einem Klebstoff oder einem Matrixmaterial noch eine Verbindung eingehen können). Alternativ oder zusätzlich kann das zumindest teilweise verformbare Material einen flüssigen oder viskosen Kunststoff und/oder trockene Fasern umfassen, die mit einem verformbaren (vorzugsweise flüssigen oder viskosen) Matrixmaterial infiltriert sind. Das Erwärmen des verformbaren Materials bewirkt oder beschleunigt vorzugsweise dessen Aushärten.

Ein erfindungsgemäßes Verfahren kann vor dem Ein- oder Aufbringen des zumindest teilweise verformbaren Materials in bzw. auf eine Reparaturstelle des Bauteils ein Schleifen, Fräsen und/oder Schäften eines Schadens an der Reparaturstelle umfassen.

Die lichtemittierende Vorrichtung kann beispielsweise mindestens einen Strahler als Lichtquelle umfassen. Gemäß einer bevorzugten Ausführungsform eines erfindungsgemäßen Verfahrens umfasst die lichtemittierende Vorrichtung mindestens eine anorganische Leuchtdiode und/oder mindestens eine organische Leuchtdiode (die z.B. über eine Passiv- oder eine Aktivmatrix gesteuert sein kann); damit kann eine besonders gute Energieeffizienz erreicht werden.

Vorzugsweise ist die lichtemittierende Vorrichtung beim Bestrahlen des verformbaren Materials zu diesem Material in einem Abstand von maximal 10cm oder maximal 5cm, bevorzugter von maximal 2cm, noch bevorzugter in einem Abstand von 0cm - 1 cm positioniert. Auf diese Weise kann der Wärmeeintrag besonders gut positionsgenau kontrolliert und/oder gesteuert werden, weil eine Streuung des Lichtes minimiert wird.

Gemäß einer vorteilhaften Ausführungsvariante der vorliegenden Erfindung ist die lichtemittierende Vorrichtung flächig (beispielsweise kreisförmig oder polygonal, z.B. rechteckig oder sogar quadratisch) ausgebildet, insbesondere kann sie eine oder mehrere Lichtquelle(n) aufweisen, die über eine Fläche von beispielsweise mindestens 1cm², bevorzugter von mindestens 900cm², noch bevorzugter mindestens 4000cm² ausgebreitet ist/sind. Im Falle mehrerer Lichtquellen können diese beispielsweise ein sich über eine derartige Fläche erstreckendes Raster ausbilden. Sie kann mindestens eine flächige organische Leuchtdiode und/oder eine Matte, eine Folie, eine Membran eine Doppelmembran und/oder ein Geflecht aus Fasern, Drähten und/oder Schnüren umfassen, die bzw. das eine Mehrzahl an Lichtquellen (z.B. anorganischen und/oder organischen Leuchtdioden) aufweisen kann. Besonders bevorzugt ist eine Ausführungsform, die eine flächig ausgebildete lichtemittierende Vorrichtung mit einer biegsamen und/oder flexiblen Flächenstruktur aufweist (die z.B. die erwähnte Matte, Folie, Membran, Doppelmembran oder das Geflecht umfassen kann). Die Flächenstruktur kann insbesondere dazu eingerichtet ist, sich mindestens teilweise an ein Bauteil anzuschmiegen, wenn die lichtemittierende Vorrichtung an das Bauteil gedrückt oder auf das Bauteil gelegt wird. Beispielsweise kann die lichtemittierende Vorrichtung sich so an eine Wölbung des Bauteils anpassen.

Eine derart flächig ausgebildete lichtemittierende Vorrichtung kann besonders gut auf einer flächigen Reparaturstelle des Bauteils befestigt werden und eignet sich dann besonders für ein Bestrahlen (und damit Erwärmen) des verformbaren Material aus unmittelbarer Nähe, beispielsweise aus einem der oben genannten Abstände. Die genannte Mehrzahl an Lichtquellen kann insbesondere anorganische und/oder organische Leuchtdioden unterschiedlicher Charakteristika umfassen, z.B. unterschiedlicher Größen und/oder Leistungsdichten und/oder Wellenlängen emittierten Lichts, was eine besonders flexible Einsetzbarkeit der lichtemittierenden Vorrichtung erlaubt. Insbesondere kann die Mehrzahl eine erste Lichtquelle aufweisen, die dazu eingerichtet ist, Licht einer ersten Wellenlänge (oder in einem ersten Wellenlängenbereich) und/oder einer ersten Leistung (oder in einem ersten Leistungsbereich) auszustrahlen, sowie eine zweite Lichtquelle, die dazu eingerichtet ist, Licht einer zweiten, von der ersten verschiedenen Wellenlänge und/oder einer zweiten, von der ersten verschiedenen Leistung (oder in einem zweiten, vom ersten verschiedenen Wellenlängenbereich bzw. Leistungsbereich) auszustrahlen. Die erste Wellenlänge bzw. Leistung (bzw. der erste Wellenlängenbereich bzw. Leistungsbereich) kann dabei geeignet zum Aushärten eines ersten verformbaren Materials und die zweite Wellenlänge (bzw. der zweite Wellenlängenbereich bzw. Leistungsbereich) geeignet zum Aushärten eines zweiten, vom ersten verschiedenen verformbaren Materials sein, und/oder die Wellenlängen- bzw. Leistungsbereiche können sich durch ihre Eignung zum Aushärten verformbaren Materials unterschiedlicher Dicken eignen. Außerdem können die unterschiedlichen Wellenlängen unterschiedlich tief in die Matrix eindringen und auf diese Weise ein homogeneres Aushärten ermöglichen.

Erfindungsgemäß sind die Lichtquellen einer Mehrzahl einer flächig ausgebildeten lichtemittierenden Vorrichtung mindestens teilweise unabhängig voneinander steuer- und/oder regelbar. Insbesondere ist vorzugsweise bei einer ersten Lichtquelle der Mehrzahl eine erste Wärmeleistung (und/oder Wellenlänge) variabel einstellbar und bei einer zweiten Lichtquelle eine zweite, von der ersten verschiedene Wärmeleistung (und/oder Wellenlänge) variabel einstellbar; eine derartige Einstellung kann beispielsweise mittels eines oder mehrerer Regelkreise und/oder durch Einstellung (bzw. Änderung) einer jeweils aktuellen Betriebsstromstärke für die jeweiligen Lichtquelle möglich sein. Ein derartiger Regelkreis kann z.B. einen oder mehrere interne (d.h. in die lichtemittierende Vorrichtung integrierte) und/oder externe (d.h. außerhalb der lichtemittierenden Vorrichtung angeordnete) Regler aufweisen, der/die dazu eingerichtet sein kann/können, eine Spannungs- und/oder Stromversorgung bestimmter (einzelner individueller oder in Gruppen von mehreren Lichtquellen zusammengefasster) Lichtquellen zu regeln. Der/die Regler kann bzw. können beispielsweise jeweils mindestens einen veränderlichen Widerstand aufweisen und/oder dazu eingerichtet sein, die Spannungs- bzw. Stromversorgung mindestens einer zugeordneten Lichtquelle (vorzugsweise kybernetisch) beispielsweise abhängig von einem oder mehreren Parametern (z.B. einer Temperatur und/oder einer anliegenden Spannung) einzustellen. Der/die Parameter kann/können z.B. von einem oder mehreren internen und/oder externen Sensoren erfasst und für die Regelung verwendet werden, und/oder er/sie kann/können unmittelbar einen entsprechend sensitiven Widerstand (z.B. einen Thermistor) beeinflussen bzw. einstellen.

Die Regelbarkeit der verschiedenen Lichtquellen ermöglicht es beispielsweise, flächige Reparaturstellen mit Licht der lichtemittierenden Vorrichtung zu bestrahlen und dabei z.B. unterschiedliche verformbare Materialien zu berücksichtigen, die jeweils verwendet werden können, und/oder unterschiedliche Materialstärken des auf- bzw. eingebrachten zumindest teilweise verformbaren Materials, die aus unterschiedlichen Tiefen von zu reparierenden Schäden resultieren können.

Eine bevorzugte Ausführungsvariante eines erfindungsgemäßen Verfahrens umfasst ein Positionieren der lichtemittierenden Vorrichtung. Die lichtemittierende Vorrichtung kann dabei auf das zumindest teilweise verformbaren Material aufgelegt und/oder aufgeklebt, mit Saugnäpfen und/oder Magneten auf ihm fixiert und/oder durch Erzeugung eines Vakuums von ihm angesogen werden und/oder durch vorherige elektrostatische Aufladung dem zumindest teilweise verformbaren Material angehaftet werden.

Alternativ oder zusätzlich können Van-der-Waals-Kräfte zum Fixieren der lichtemittierenden Vorrichtung erzeugt werden. Dazu weist die lichtemittierende Vorrichtung vorzugsweise eine glatte Oberfläche auf, die dazu eingerichtet ist, eine lockere molekulare Bindung mit einer Oberfläche des Bauteils an der Reparaturstelle einzugehen.

Eine erfindungsgemäße lichtemittierende Vorrichtung kann dem entsprechend mindestens ein Fixierelement (wie z.B. mindestens einen Magneten und/oder Saugnapf und/oder mindestens eine Klebefolie und/oder Klebeschicht zum Fixieren der lichtemittierenden Vorrichtung aufweisen.

Eine erfindungsgemäße Reparaturvorrichtung kann eine Vakuumeinheit umfassen, die dazu eingerichtet ist, die lichtemittierende Vorrichtung an einem zu reparierenden Bauteil anzusaugen. Alternativ oder zusätzlich kann eine erfindungsgemäße Reparaturvorrichtung in einen Herstellungsaufbau für ein Faserverbundbauteil integriert sein.

Die lichtemittierende Vorrichtung kann beim Bestrahlen des verformbaren Materials an eine ortsfeste Energiequelle angeschlossen sein, beispielsweise an ein Stromnetz, oder an eine mobile (vorzugsweise tragbare) Stromversorgungseinheit mit mindestens einem Akkumulator, mindestens einer Batterie, mindestens einer Solarzelle und/oder mindestens einem Kondensator. Gemäß einer vorteilhaften Ausführungsform ist eine derartige Stromversorgungseinheit in die lichtemittierende Vorrichtung integriert bzw. eingebaut. Insbesondere kann eine lichtemittierende Vorrichtung Teil einer Reparaturvorrichtung sein, die eine räumlich unabhängige, losgelöst funktionsfähige und/oder mobile Einheit darstellt, beispielsweise ein tragbares Handgerät ist (das vorzugsweise eine Masse von maximal 10kg, bevorzugter von maximal 5 kg aufweist). Eine derartige Ausführungsform erlaubt eine einfache und vielseitige Verwendung, beispielsweise um unvorhergesehene Notfallreparaturen an Bauteilen durchzuführen.

Eine vorteilhafte Ausführungsform eines erfindungsgemäßen Verfahrens umfasst ein Messen mindestens einer Temperatur an der Reparaturstelle und/oder an der lichtemittierenden Vorrichtung; eine lichtemittierende Vorrichtung kann eine oder mehrere entsprechende Messvorrichtung(en) für die Temperatur (wie beispielsweise Temperaturfühler und/oder Thermistoren) aufweisen. Bei einer Messung an der lichtemittierenden Vorrichtung kann beispielsweise eine Erwärmung erfasst werden, die aus einer Reflexion von Licht vom Bauteil resultiert und die Rückschlüsse auf eine Bauteiltemperatur zulässt. Die Messung bzw. die Messvorrichtung(en) ermöglichen eine Kontrolle des Erwärmungs- und damit des Reparaturprozesses.

Gemäß einer bevorzugten Ausführungsform der vorliegenden Erfindung wird die lichtemittierende Vorrichtung mindestens teilweise automatisch in Abhängigkeit von einer gemessenen Temperatur gesteuert und/oder geregelt; die Messvorrichtung(en) der lichtemittierenden Vorrichtung kann dazu an eine Rechner- und Regelungseinheit gekoppelt sein; eine erfindungsgemäße Reparaturvorrichtung kann eine derartige Einheit umfassen.

Auf diese Weise kann die Erwärmung automatisch optimiert und/oder es kann eine automatische Sicherung eines Reparaturvorgang vor Überhitzung eingerichtet sein.

Eine während eines Reparaturvorgangs gemessene Temperatur kann in einer Speicherungsvorrichtung gespeichert werden, vorzugsweise in Kombination mit einem oder mehreren zugehörigen Regelungsparametern (z.B. angelegte Stromstärke und/oder Spannung) der lichtemittierenden Vorrichtung, die zum Zeitpunkt der Messung eingestellt sind oder waren; eine erfindungsgemäße Reparaturvorrichtung kann eine derart eingerichtete Speicherungsvorrichtung umfassen. Auf diese Weise kann mindestens ein Erfahrungswert protokolliert werden. Bei einer wiederholten Reparatur kann eine geeignete Temperatur basierend auf dem Erfahrungswert durch Einstellung des oder der zugehörigen Regelungsparameter(s) gezielt eingestellt werden.

Im Folgenden wird ein bevorzugtes Ausführungsbeispiel der Erfindung anhand einer Zeichnung näher erläutert. Es versteht sich, dass einzelne Elemente und Komponenten auch anders kombiniert werden können sind als dargestellt.

Es zeigt schematisch:

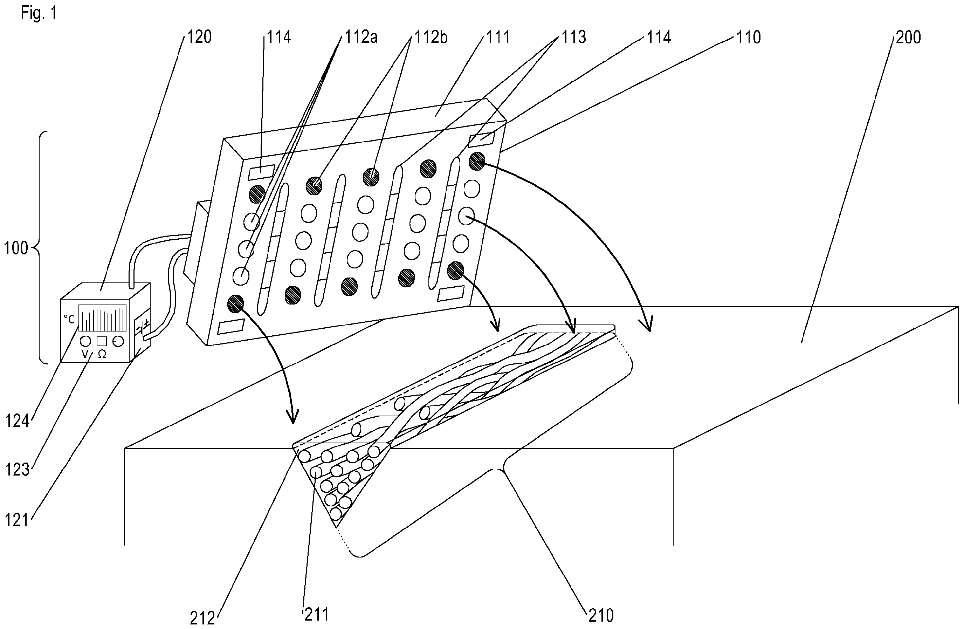

- Figur 1: eine Reparaturvorrichtung gemäß einer Ausführungsform der vorliegenden Erfindung in Anwendung

In Figur 1 ist beispielhaft eine Reparaturvorrichtung 100 zum Reparieren eines Bauteils 200 gemäß einer Ausführungsform der vorliegenden Erfindung dargestellt. Das Bauteil 200 weist eine ausgefräste Reparaturstelle 210 auf, die mit Fasern 211 und einem nicht ausgehärteten, also verformbaren Kunststoff 212 infiltriert sind.

Die Reparaturvorrichtung 100 umfasst eine lichtemittierende Vorrichtung 110, die auf der Reparaturstelle 210 positioniert wird. Die lichtemittierende Vorrichtung 110 umfasst eine Matte 111 mit rechteckiger Grundfläche und mit einer Mehrzahl an Lichtquellen 112a, 112b, von denen in der Figur der Übersichtlichkeit halber nur ein Teil mit Bezugszeichen versehen ist. Die Lichtquellen, die beispielsweise anorganische Leuchtdioden sein können, sind im dargestellten Beispiel an der Matte in einem Raster angeordnet, das sich im Wesentlichen über die gesamte Grundfläche der Matte erstreckt.

Die Matte weist zudem Klebeflächen 114 für ein lösbares Fixieren der Matte auf dem Bauteil 200 sowie flächige Temperatursensoren 113 mit jeweils mehreren Messflächen auf. Die Temperatursensoren können beispielsweise dazu eingerichtet sein, die von dem Bauteil 200, insbesondere von der Reparaturstelle 210 reflektierte Wärme in regelmäßigen Zeitabständen und/oder auf eine Benutzereingabe hin zu erfassen.

Die lichtemittierende Vorrichtung 110 ist an eine eigene Stromversorgungseinheit 121 angeschlossen, die beispielsweise mindestens eine Batterie, mindestens einen Akkumulator und/oder mindestens einen Kondensator umfassen kann.

Im dargestellten Ausführungsbeispiel ist die Stromversorgungseinheit 121 in ein Gehäuse einer Regelungsvorrichtung 120 mit Bedienungseinheit 122 integriert, an die die lichtemittierende Vorrichtung ebenfalls angeschlossen ist. Insgesamt stellt die Reparaturvorrichtung 100 damit eine unabhängig funktionsfähige, vorzugsweise Einheit dar, vorzugsweise ein tragbare Handgerät.

Von den Temperatursensoren 113 erfasste Werte können an die Regelungsvorrichtung 120 übermittelt werden. In der gezeigten Ausführungsform umfasst die Regelungsvorrichtung ein Anzeigefeld 123, an dem gemessene Temperaturen visualisiert werden können.

Bei einer geeigneten Positionierung der lichtemittierenden Vorrichtung 110 (wie durch die Pfeile angegeben) sind im in der Figur gezeigten Beispiel einige der Lichtquellen (nämlich die in den drei mittleren Reihen angeordneten Lichtquellen 112a) auf der Reparaturstelle 210 angeordnet, wohingegen die Lichtquellen 112b in den äußeren Reihen neben der Reparaturstelle 210 angeordnet werden. Die letzteren Lichtquellen werden daher vorzugsweise nicht eingeschaltet, was in der Figur durch eine Verdunklung kenntlich gemacht ist, wohingegen die mittleren Lichtquellen 112a erleuchtet sind und die Reparaturstelle, insbesondere darin den verformbaren Kunststoff 212 bestrahlen und dadurch erwärmen, was zu einer beabsichtigten Aushärtung des Kunststoffs 212 führt.

Eine Auswahl an ein- bzw. auszuschaltenden Lichtquellen 112a, 112b ist vorzugsweise über die Bedienungseinheit 122 der Regelungsvorrichtung 120 möglich; darüber hinaus kann über die Bedienungseinheit 122 eine individuelle Einstellung mindestens eines Regelungsparameters der einzelnen Lichtquellen manuell oder automatisiert (z.B. in Abhängigkeit von den gemessenen Temperaturen) möglich sein. Insbesondere kann beispielsweise eine Leistung der Lichtquellen abhängig von einer lokalen Ausprägung des zu reparierenden Defektes gesteuert und/oder geregelt werden. In der in der Figur gezeigten Ausführungsform könnte beispielsweise bei den Lichtquellen 112a, die entlang der mittleren Querachse angeordnet sind und die über der tiefsten Stelle des Defekts zu liegen kommen, vorzugsweise eine stärkere Leistung eingestellt werden als bei den übrigen Lichtquellen 112a.

### Bezugszeichen

- 100: Reparaturvorrichtung
- 110: lichtemittierende Vorrichtung
- 111: Matte
- 112a, 112b: Lichtquellen
- 113: Temperatursensoren
- 114: Klebefläche
- 120: Regelungsvorrichtung
- 121: Stromversorgungseinheit
- 122: Bedienungseinheit
- 123: Anzeigefeld

- 200: Bauteil
- 210: Reparaturstelle
- 211: Fasern
- 212: verformbarer Kunststoff

## Patentansprüche

1. Verfahren zum Reparieren eines Bauteils (200), das faserverstärkten Kunststoff enthält, wobei das Verfahren umfasst:
Ein- und/oder Aufbringen mindestens eines zumindest teilweise verformbaren Materials (212) in bzw. auf eine Reparaturstelle (210) des Bauteils (200);
Erwärmen des verformbaren Materials durch ein Bestrahlen des verformbaren Materials mit Licht einer lichtemittierenden Vorrichtung (110) umfasst, wobei die lichtemittierende Vorrichtung (110) flächig ausgebildet ist und eine Mehrzahl an Lichtquellen (112a, 112b) aufweist, von denen einige der Lichtquellen (112a) auf der Reparaturstelle (210) angeordnet sind; das Verfahren ist **gekennzeichnet durch** ein Regeln der lichtemittierenden Vorrichtung (110) mit mindestens einem externen und/oder internen Regler, wobei die Lichtquellen (112a, 112b) unabhängig voneinander steuer- und/oder regelbar sind, und wobei eine Leistung der auf der Reparaturstelle (210) angeordneten Lichtquellen (112a) abhängig von einer lokalen Ausprägung der Reparaturstelle (210) gesteuert und/oder geregelt wird.

2. Verfahren gemäß Anspruch 1, wobei die lichtemittierende Vorrichtung mindestens eine anorganische Leuchtdiode und/oder mindestens eine organische Leuchtdiode und/oder mindestens einen Strahler als Lichtquelle (112a, 112b) umfasst.

3. Verfahren gemäß Anspruch 1 oder 2, wobei die lichtemittierende Vorrichtung mindestens eine flächig ausgebildete organische Leuchtdiode und/oder mindestens eine Matte (111), Folie, Membran, Doppelmembran und/oder mindestens ein Geflecht aus Fasern, Drähten und/oder Schnüren umfasst, die bzw. das eine Mehrzahl an Lichtquellen (112a, 112b) aufweist.

4. Verfahren gemäß einem der vorhergehenden Ansprüche, das ein Positionieren der lichtemittierenden Vorrichtung (110) umfasst, wobei die lichtemittierende Vorrichtung beim Positionieren auf das zumindest teilweise verformbaren Material (212) aufgelegt und/oder aufgeklebt, mit Saugnäpfen und/oder Magneten auf ihm fixiert und/oder durch Erzeugung eines Vakuums und/oder elektrostatischer Aufladung von ihm angesogen wird.

5. Verfahren gemäß einem der Ansprüche 1 bis 3, wobei die lichtemittierende Vorrichtung (110) in einem Abstand von maximal 15cm oder maximal 5cm, bevorzugter von maximal 2cm, noch bevorzugter in einem Abstand von 0cm - 1 cm zum zumindest teilweise verformbaren Material angeordnet und/oder in einen Herstellungsaufbau für ein Faserverbundbauteil integriert ist.

6. Verfahren gemäß einem der vorhergehenden Ansprüche, wobei die lichtemittierende Vorrichtung beim Bestrahlen des verformbaren Materials an eine ortsfeste Energiequelle oder an eine mobile Stromversorgungseinheit (121) angeschlossen ist und/oder wobei die lichtemittierende mindestens eine eingebaute Solarzelle, mindestens einen eingebauten Akkumulator, mindestens eine eingesetzte Batterie und/oder mindestens einen eingebauten Kondensator aufweist.

7. Verfahren gemäß einem der vorhergehenden Ansprüche, das ein Messen einer Temperatur an der Reparaturstelle (210) und/oder an der lichtemittierenden Vorrichtung (110) umfasst.

8. Verfahren gemäß Anspruch 7, das ein Speichern mindestens einer gemessenen Temperatur zusammen mit mindestens einem zugehörigen Regelungsparameter der lichtemittierenden Vorrichtung (110) umfasst.

9. Lichtemittierende Vorrichtung (110), die dazu eingerichtet ist, in einem Verfahren gemäß einem der Ansprüche 1 bis 8 zum Erwärmen eines zumindest teilweise verformbaren Materials (212) verwendet zu werden;
wobei die Vorrichtung (110) flächig ausgebildet ist, eine Mehrzahl an Lichtquellen (112a, 112b) und eine Regelungsvorrichtung (120) aufweist, wobei die Lichtquellen (112a, 112b) mittels der Regelungsvorrichtung (120) unabhängig voneinander in ihrer Leistung steuer- und/oder regelbar sind, so dass auf der Reparaturstelle (210) angeordnete Lichtquellen (112a) abhängig von einer lokalen Ausprägung der Reparaturstelle (210) steuer- und/oder regelbar sind.

10. Lichtemittierende Vorrichtung gemäß Anspruch 9, die mindestens ein Fixierelement (114) zum Fixieren der lichtemittierenden Vorrichtung (110) an einer Reparaturstelle (210) eines Bauteils (200) umfasst und/oder die eine Vorrichtung zur Temperaturmessung (113) an der Reparaturstelle und/oder an der lichtemittierenden Vorrichtung aufweist.

11. Lichtemittierende Vorrichtung gemäß einem der Ansprüche 9 oder 10, die als Energiequelle mindestens eine eingebaute Solarzelle, mindestens einen eingebauten Akku, mindestens einer eingesetzte Batterie und/oder mindestens einem eingebauten Kondensator umfasst.

12. Reparaturvorrichtung (100) zum Reparieren eines Bauteils (200), das faserverstärkten Kunststoff enthält, wobei die Reparaturvorrichtung eine lichtemittierende Vorrichtung (110) gemäß einem der Ansprüche 9 bis 11 umfasst.

13. Reparaturvorrichtung gemäß Anspruch 12, die in einen Herstellungsaufbau für ein Faserverbundbauteil integriert ist und/oder die ein tragbares Handgerät darstellt.

## Claims

1. Method for repairing a component (200) containing fibre-reinforced plastic, wherein the method comprises:
introducing and/or applying at least one at least partially deformable material (212) into or onto a repair location (210) of the component (200);
heating the deformable material by irradiating the deformable material with light from a light-emitting device (110), wherein the light-emitting device (110) is sheet-like and comprises a plurality of light sources (112a, 112b), of which some of the light sources (112a) are arranged on the repair location (210); the method is **characterized by**
regulating the light-emitting device (110) using at least one external and/or internal regulator, wherein the light sources (112a, 112b) can be subjected to open-loop and/or closed-loop control independently of one another, and
wherein a powder output of the light sources (112a) arranged on the repair location (210) is subjected to open-loop and/or closed-loop control depending on a local formation of the repair location (210).

2. Method according to Claim 1, wherein the light-emitting device comprises at least one inorganic light-emitting diode and/or at least one organic light-emitting diode and/or at least one radiator as light source (112a, 112b) .

3. Method according to Claim 1 or 2, wherein the light-emitting device comprises at least one flat organic light-emitting diode and/or at least one mat (111), film, membrane, double membrane and/or at least one interwoven fabric made of fibres, wires and/or cords, which comprises a plurality of light sources (112a, 112b).

4. Method according to one of the preceding claims, comprising positioning the light-emitting device (110), wherein, during the positioning operation, the light-emitting device is placed onto the at least partially deformable material (212) and/or adhesively bonded thereto, fixed thereto using suction cups and/or magnets, and/or sucked onto it by generating a vacuum and/or electrostatically charging it.

5. Method according to one of Claims 1 to 3, wherein the light-emitting device (110) is arranged at a spacing from the at least partially deformable material of at most 15 cm or at most 5 cm, preferably at most 2 cm, even more preferably at a spacing of 0 cm - 1 cm, and/or integrated in a structure for producing a fibre composite component.

6. Method according to one of the preceding claims, wherein the light-emitting device is connected to a stationary energy source or to a movable power supply unit (121) while the deformable material is being irradiated, and/or wherein the light-emitting device comprises at least one integrated solar cell, at least one integrated rechargeable battery, at least one integrated battery and/or at least one integrated capacitor.

7. Method according to one of the preceding claims, comprising measuring a temperature at the repair location (210) and/or at the light-emitting device (110).

8. Method according to Claim 7, comprising storing at least one measured temperature together with at least one associated regulation parameter of the light-emitting device (110) in memory.

9. Light-emitting device (110) designed to be used in a method according to one of Claims 1 to 8 for heating an at least partially deformable material (212); wherein the device (110) is sheet-like and comprises a plurality of light sources (112a, 112b) and a regulation device (120), wherein the power outputs of the light sources (112a, 112b) can be subjected to open-loop or closed-loop control by means of the regulation device (120) independently of one another, with the result that light sources (112a) arranged on the repair location (210) can be subjected to open-loop and/or closed-loop control independently of a local formation of the repair location (210).

10. Light-emitting device according to Claim 9, which comprises at least one fixing element (114) for fixing the light-emitting device (110) to a repair location (210) of a component (200) and/or which comprises a temperature measuring device (113) for measuring the temperature at the repair location and/or at the light-emitting device.

11. Light-emitting device according to either of Claims 9 and 10, which comprises at least one integrated solar cell, at least one integrated rechargeable battery, at least one integrated battery and/or at least one integrated capacitor as energy source.

12. Repair device (100) for repairing a component (200) containing fibre-reinforced plastic, wherein the repair device comprises a light-emitting device (110) according to one of Claims 9 to 11.

13. Repair device according to Claim 12, which is integrated in a structure for producing a fibre composite component and/or is a portable hand-held device.

## Revendications

1. Procédé de réparation d'un composant (200) contenant une matière plastique renforcée par des fibres, le procédé comprenant :
l'introduction et/ou l'application d'au moins un matériau au moins partiellement déformable (212) dans ou sur un site de réparation (210) du composant (200) ;
le chauffage du matériau déformable par une exposition du matériau déformable à de la lumière provenant d'un dispositif émetteur de lumière (110), le dispositif émetteur de lumière (110) étant configuré sous forme plane et présentant une pluralité de sources de lumière (112a, 112b), certaines des sources de lumière (112a) étant agencées sur le site de réparation (210) ; le procédé étant **caractérisé par**
une régulation du dispositif émetteur de lumière (110) avec au moins un régulateur externe et/ou interne, les sources de lumière (112a, 112b) pouvant être commandées et/ou régulées indépendamment les unes des autres, et une puissance des sources de lumière (112a) agencées sur le site de réparation (210) étant commandée et/ou régulée en fonction d'une caractéristique locale du site de réparation (210).

2. Procédé selon la revendication 1, dans lequel le dispositif émetteur de lumière comprend au moins une diode électroluminescente inorganique et/ou au moins une diode électroluminescente organique et/ou au moins un émetteur en tant que source de lumière (112a, 112b).

3. Procédé selon la revendication 1 ou 2, dans lequel le dispositif émetteur de lumière comprend au moins une diode électroluminescente organique réalisée sous forme plane et/ou au moins un mat (111), une feuille, une membrane, une double membrane et/ou au moins un treillis de fibres, de fils et/ou de cordons, qui présente une pluralité de sources de lumière (112a, 112b).

4. Procédé selon l'une quelconque des revendications précédentes, comprenant un positionnement du dispositif émetteur de lumière (110), dans lequel, lors du positionnement, le dispositif émetteur de lumière est déposé et/ou collé sur le matériau au moins partiellement déformable (212), fixé sur celui-ci avec des ventouses et/ou des aimants, et/ou aspiré par celui-ci par génération d'un vide et/ou d'une charge électrostatique.

5. Procédé selon l'une quelconque des revendications 1 à 3, dans lequel le dispositif émetteur de lumière (110) est agencé à une distance maximale de 15 cm ou maximale de 5 cm, de manière davantage préférée maximale de 2 cm, de manière encore davantage préférée à une distance de 0 cm à 1 cm du matériau au moins partiellement déformable et/ou est intégré dans une structure de fabrication pour un composant composite de fibres.

6. Procédé selon l'une quelconque des revendications précédentes, dans lequel, lors de l'exposition du matériau déformable, le dispositif émetteur de lumière est raccordé à une source d'énergie fixe ou à une unité d'alimentation électrique mobile (121) et/ou dans lequel le dispositif émetteur de lumière comprend au moins une cellule solaire intégrée, au moins un accumulateur intégré, au moins une batterie insérée et/ou au moins un condensateur intégré.

7. Procédé selon l'une quelconque des revendications précédentes, qui comprend une mesure d'une température au niveau du site de réparation (210) et/ou au niveau du dispositif émetteur de lumière (110).

8. Procédé selon la revendication 7, qui comprend un stockage d'au moins une température mesurée conjointement avec au moins un paramètre de régulation associé du dispositif émetteur de lumière (110).

9. Dispositif émetteur de lumière (110) adapté pour être utilisé dans un procédé selon l'une quelconque des revendications 1 à 8 pour chauffer un matériau au moins partiellement déformable (212) ;
le dispositif (110) étant réalisé sous forme plane, présentant une pluralité de sources de lumière (112a, 112b) et un dispositif de régulation (120), les sources de lumière (112a, 112b) pouvant être commandées et/ou régulées en puissance indépendamment les unes des autres au moyen du dispositif de régulation (120), de telle sorte que des sources de lumière (112a) agencées sur le site de réparation (210) peuvent être commandées et/ou régulées en fonction d'une caractéristique locale du site de réparation (210).

10. Dispositif émetteur de lumière selon la revendication 9, qui comprend au moins un élément de fixation (114) pour fixer le dispositif émetteur de lumière (110) sur un site de réparation (210) d'un composant (200) et/ou qui présente un dispositif pour mesurer la température (113) au niveau du site de réparation et/ou au niveau du dispositif émetteur de lumière.

11. Dispositif émetteur de lumière selon l'une quelconque des revendications 9 ou 10, comprenant en tant que source d'énergie au moins une cellule solaire intégrée, au moins un accumulateur intégré, au moins une batterie insérée et/ou au moins un condensateur intégré.

12. Dispositif de réparation (100) pour réparer un composant (200) contenant une matière plastique renforcée par des fibres, le dispositif de réparation comprenant un dispositif émetteur de lumière (110) selon l'une quelconque des revendications 9 à 11.

13. Dispositif de réparation selon la revendication 12, qui est intégré dans une structure de fabrication d'un composant composite de fibres et/ou qui constitue un appareil portatif à main.
